# EUROPÄISCHE PATENTSCHRIFT

(11) **EP 1 152 930 B1**
(45) Veröffentlichungstag und Bekanntmachung des Hinweises auf die Patenterteilung: **15.06.2005**
(21) Anmeldenummer: 00987168.2
(22) Anmeldetag: 18.11.2000
(51) Int. Cl.: B60S 1/38

(54) **SCHEIBENWISCHER, INSBESONDERE FLACHBALKENSCHEIBENWISCHER FÜR FAHRZEUGE**
WIPER BLADE, ESPECIALLY FLAT BAR WIPER BLADE FOR VEHICLES
ESSUIE-GLACE, EN PARTICULIER RACLETTE D'ESSUIE-GLACE A BARRE PLATE POUR VEHICULES

(30) Priorität: 03.12.1999 DE 19958386
(43) Veröffentlichungstag der Anmeldung: 14.11.2001
(73) Patentinhaber: ROBERT BOSCH GMBH, 70442 Stuttgart (DE)
(72) Erfinder: HUBER, Joerg, 72762 Reutlingen (DE); WILHELM, Manfred, 71735 Eberdingen (DE); MAZURKIEWICZ, Julius, B-3290 Diest (BE)
(86) Internationale Anmeldenummer: PCT/DE2000/004083
(87) Internationale Veröffentlichungsnummer: WO 2001/040034

(56) Entgegenhaltungen:
- EP-A- 0 594 451
- DE-A- 19 816 609
- US-A- 3 192 551

## Beschreibung

### Stand der Technik

Die Erfindung geht aus von einem Scheibenwischer, insbesondere Flachbalkenscheibenwischer für Fahrzeuge, der im Oberbegriff des Anspruchs 1 definierten Gattung.

Sog. Flachbalken-Scheibenwischer sind beispielsweise aus der US-A-3 192 551 bekannt. Bei ihnen erzeugt ein einziger Federbandrücken, an dessen mittiger Anschlußvorrichtung der Wischerarm des Scheibenwischers angreift, einen gleichmäßigen Andruck der am Rücken befestigten Gummiwischleiste auf der in der Regel gewölbten Oberfläche der Front- oder Windschutzscheibe des Fahrzeugs über den gesamten Wischbereich. Der gebogene Federbandrücken weist hierzu eine über seine Länge sich ändernde Materialstärke auf, die maximal in Rückenmitte ist und zu den beiden Rückenenden hin abnimmt.

### Vorteile der Erfindung

Der erfindungsgemäße Scheibenwischer mit den Merkmalen des Anspruchs 1 hat den Vorteil, daß infolge des quasi konstanten Härteverlaufs über die Länge des Federbandrückens letzterer in allen Bereichen gleichmäßig und gleich gut gebogen werden kann und so ein optimaler Verlauf der auf die Wischerleiste wirkenden Anpreßkraft bei unterschiedlich gewölbten Frontscheiben des Fahrzeugs eingestellt werden kann.

Durch die in den weiteren Ansprüchen aufgeführten Maßnahmen sind vorteilhafte Weiterbildungen und Verbesserungen des im Anspruch 1 angegebenen Scheibenwischers möglich.

Gemäß einer bevorzugten Ausführungsform der Erfindung wird der Federbandrücken im Durchlaufverfahren auf die erforderliche Härtetemperatur erwärmt, anschließend abgeschreckt und zum Anlassen auf Anlaßtemperatur so erwärmt, daß er die Anlaßtemperatur erst unmittelbar vor Verlassen der Anlaßzone erreicht. Auf diese Weise wird der weitgehend konstante Festigkeitsverlauf im Durchlaufverfahren recht zuverlässig und reproduzierbar erreicht. Dadurch, daß die Anlaßtemperatur erst "so spät wie möglich" erreicht wird, ist die Verweilzeit des Federbandmaterials auf Anlaßtemperatur extrem gering und die Endhärte des Federbandrückens wird ausschließlich durch die Anlaßtemperatur bestimmt, während die Verweilzeit keinen Einfluß auf die Endhärte hat.

Um die vorgenannte Forderung nach extrem kurzer Verweilzeit des Federbandmaterials auf Anlaßtemperatur in einfacher Weise zu realisieren, ist die Anlaßzone für den Federbandrücken in mehrere Temperaturzonen unterteilt und der Federbandrücken wird so durch die Temperaturzonen hindurchgeführt, daß er die die Anlaßtemperatur herbeiführende Temperaturzone zuletzt durchläuft. Durch das damit erreichte Vorwärmen des Federbandrückens auf noch unterhalb der eigentlichen Anlaßtemperatur liegende Temperaturen ist das Federbandmaterial bereits so erwärmt, daß in der letzten Temperaturzone die Anlaßtemperatur sowohl in den dicken als auch in den dünnen Bereichen des Federbandrückens nahezu gleich schnell erreicht wird und damit die Verweilzeit bei Anlaßtemperatur für alle Bandbereiche etwa gleich groß ist.

Diese schnelle Erwärmung des Federbandrückens auf die Anlaßtemperatur in der letzten Temperaturzone wird gemäß einer bevorzugten Ausführungsform der Erfindung durch Wärmestrahlung und durch eine kurze Einwirkungsstrecke für diese Wärmestrahlung auf den Federbandrücken erreicht. Dabei ist eine gute thermische Abschottung der letzten Temperaturzone gegenüber der vorangehenden Temperaturzone von Vorteil.

### Zeichnung

Die Erfindung ist anhand eines in der Zeichnung dargestellten Ausführungsbeispiels in der nachfolgenden Beschreibung näher erläutert. Es zeigen jeweils in schematischer Darstellung:
- Fig. 1: eine Seitenansicht eines Flachbalken-Scheibenwischers,
- Fig. 2: eine Seitenansicht eines für seine Vergütung vorbereiteten Federbandrückens des Flachbalken-Scheibenwischers in Fig. 1,
- Fig. 3: ein Diagramm des Verlaufs von Dicke und Härte über die Länge eines herkömmlich vergüteten Federbandrückens,
- Fig. 4: ein gleiches Diagramm des Verlaufs der Dicke und Härte über die Länge des erfindungsgemäß vergüteten Federbandrückens,
- Fig. 5: eine gleiche Darstellung wie in Fig. 4 eines erfindungsgemäß mit einer höheren Härtevorschrift vergüteten Federbandrückens.

### Beschreibung des Ausführungsbeispiels

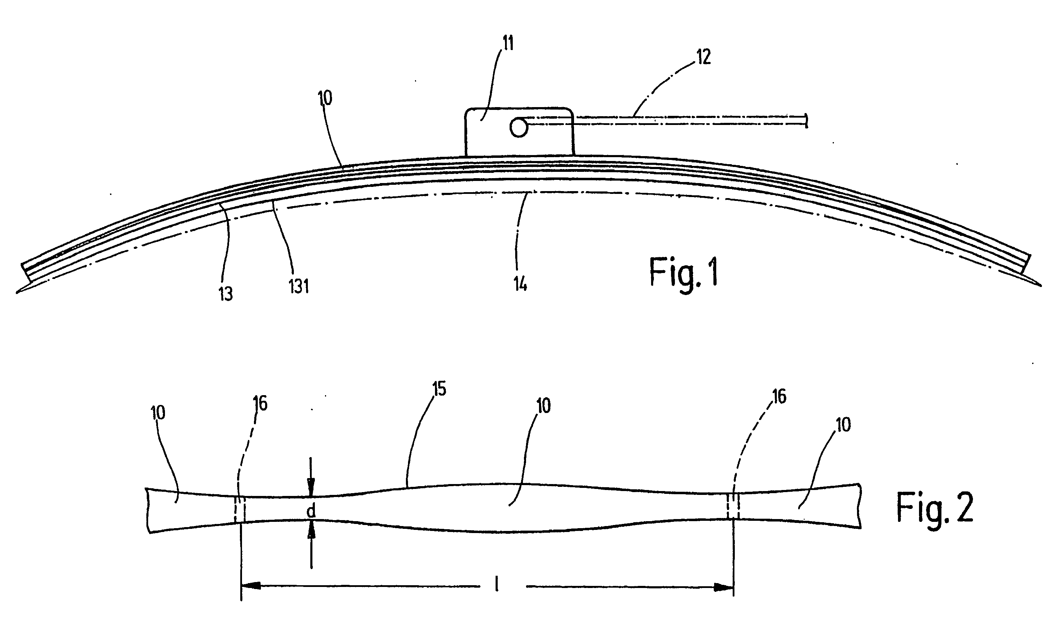

Der in Fig. 1 in Seitenansicht dargestellte Flachbalken-Scheibenwischer als Ausführungsbeispiel für einen Scheibenwischer für Kraftfahrzeuge, weist einen gewölbten Federbandrücken 10 auf, der mittig mit einer Anschlußvorrichtung 11 für einen in Fig. 1 strichliniert angedeuteten Wischerarm 12 versehen und mit einer gummielastischen Wischleiste 13 vereinigt ist. Der Federbandrücken 10 ist z.B. durch ein Roll- und Biegeverfahren gewölbt und weist eine über die Rückenlänge 1 variable Banddicke oder Materialstärke d auf, wie dies in Fig. 2 verdeutlicht ist. Dabei ist die Banddicke d in der Mitte des Federbandrückens 10 am größten und nimmt zu den beiden Enden des Federbandrückens 10 stetig ab. Das Anbringen der gummielastischen Wischleiste 13 kann derart erfolgen, daß der Federbandrücken 10 in eine ebene Lage gedrückt und die Wischleiste 13 auf der im entlasteten Zustand konkaven Seite aufgeklebt oder aufvulkanisiert wird. Im Gebrauchszustand liegt der Scheibenwischer mit der' Wischleiste 13 unter einem gewissen Anpreßdruck auf der in Fig. 1 mit 14 angedeuteten Front- oder Windschutzscheibe des Fahrzeugs auf und wird durch den Wischerarm 12 in bekannter Weise von einem Wischergetriebe in Schwenkbewegung versetzt, so daß die Wischkante 131 der Wischleiste 13 über die Scheibe 14 hinweggeführt wird.

Der Federbandrücken 10 ist vergütet und weist trotz seiner über die Rückenlänge 1 variierenden Banddicke d einen über die Bandlänge 1 nahezu konstanten Festigkeits- oder Härteverlauf (HV) auf. Um diesen quasi konstanten Härteverlauf fertigungstechnisch reproduzierbar zu gewährleisten, erfolgt die Vergütung (Härten und Anlassen) des Federbandrückens 10 im Durchlaufverfahren derart, daß er auf eine erforderliche Härtetemperatur erwärmt, anschließend abgeschreckt und zum Anlassen auf Anlaßtemperatur so erwärmt wird, daß er die Anlaßtemperatur erst unmittelbar vor Verlassen der Anlaßzone erreicht. Um das Durchlaufverfahren zu ermöglichen, ist eine Vielzahl von Federbandrücken 10 in einem Federband 15 vereinigt, wie dies abschnittweise in Fig. 2 in Seitenansicht dargestellt ist. Nach dem Vergüten wird das Federband 15 an Trennstellen 16 durchgeschnitten, so daß die vergüteten Federbandrücken 10 vereinzelt zur Verfügung stehen.

Während die Härtung des Federbandes 15 in bekannter Weise erfolgt, wird beim Anlassen des Federbandes 15 jeder Federbandrücken 10 während des Durchlaufs des Federbandes 15 durch die Anlaßzone so erwärmt, daß sein Bandmaterial die Anlaßtemperatur so spät wie möglich, nämlich erst unmittelbar vor Verlassen der Anlaßzone erreicht. Damit ist die Verweilzeit des Bandmaterials auf Anlaßtemperatur extrem kurz, so daß die Verweilzeit keinen Einfluß auf das Härteergebnis nehmen kann und die Endhärte des Federbandrückens 10 ausschließlich von der Anlaßtemperatur bestimmt wird. Um dieses Erreichen der Anlaßtemperatur "so spät wie möglich" zu realisieren, ist die Anlaßzone in mehreren Temperaturzonen unterteilt und das Federband 15 so durch die Temperaturzone hindurchgeführt, daß jeder Federbandrücken 10 die die Anlaßtemperatur herbeiführende Temperaturzone zuletzt durchläuft. Die letzte Temperaturzone ist dabei in ihrer Länge so auf die Durchlaufgeschwindigkeit des Federbandrückens 10 abgestimmt, daß die Anlaßtemperatur unmittelbar vor Verlassen dieser Temperaturzone errreicht wird. Hierzu wird der Federbandrücken 10 in der letzten Temperaturzone durch Wärmestrahlung vorgewärmt und in den vorhergehenden Temperaturzonen auf eine unter der Anlaßtemperatur liegende Temperatur erwärmt, so daß die Erwärmung auf Anlaßtemperatur durch die Wärmestrahlung in der bevorzugt thermisch abgeschotteten letzten Wärmezone sehr schnell erreicht wird.

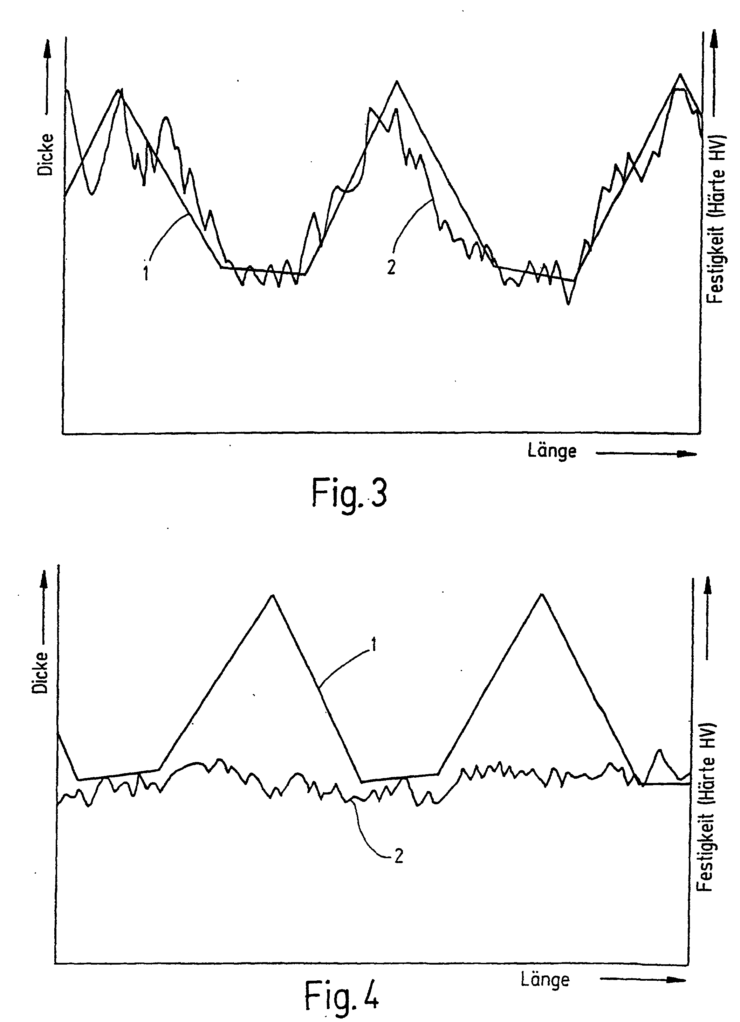

In den Diagrammen der Fig. 3 und 4 ist das Vergütungsergebnis eines erfindungsgemäß vergüteten Federbandrückens 10 in Gegenüberstellung zu einem herkömmlich vergüteten Federbandrücken 10 dargestellt. Die Kurven 1 stellen dabei jeweils den Dickenverlauf des Federbandrückens 10 über die Rückenlänge dar. Die Kurven 2 zeigen den Festigkeits- oder Härteverlauf (HV-Werte) über die Rückenlänge. Deutlich ist zu sehen, daß in Fig. 3 die Härtewerte mit der Banddicke schwanken und die Bereiche mit kleinerer Banddicke geringere HV-Werte aufweisen als die Bereiche mit größerer Banddicke, hingegen in Fig. 4 der Verlauf der HV-Werte über die Rückenlänge annähernd kontant ist und somit die dünneren Bandbereiche etwa die gleichen HV-Werte wie die dickeren Bandbereiche besitzen.

Der Federbandrücken 10 wurde in den Fällen der Fig. 3 und 4 etwa der gleichen Härtetemperatur ausgesetzt. Die Anlaßtemperatur im Falle der Fig. 3 war konstant und lag auf einem höheren Temperaturniveau als im Falle der Fig. 4. Die Anlaßtemperatur im Falle der Fig. 4 lag in den der letzten Temperaturzone vorhergehenden Temperaturzonen niedriger als die erforderliche Anlaßtemperatur.

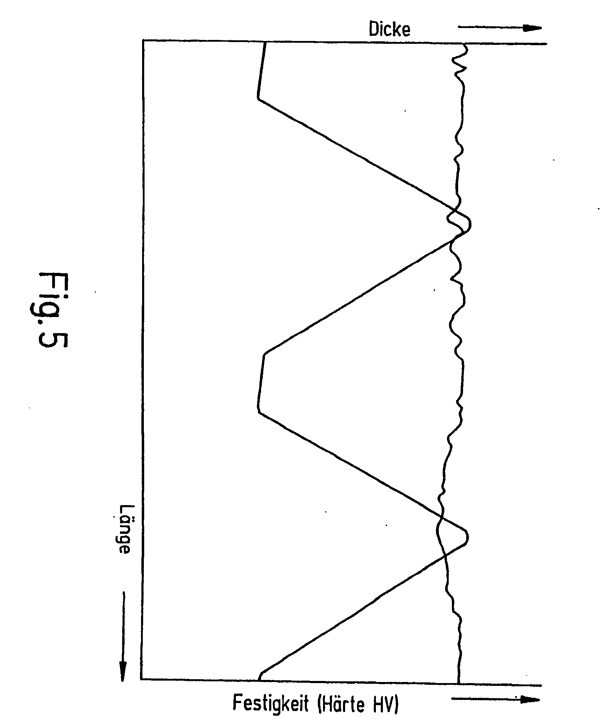

Das Diagramm Fig. 5 unterscheidet sich von dem Diagramm in Fig. 4 nur dadurch, daß bei dem Federbandrücken 10 eine höhere Härtevorschrift angestrebt wurde. Die Härtetemperatur für den Federbandrücken gemäß Fig. 5 war gleich groß bemessen wie im Falle der Fig. 4 und konstant. Die Anlaßtemperatur wurde wesentlich reduziert, und der Temperaturunterschied zwischen den vorgehenden Temperaturonen und der in der letzten Temperaturzone bewirkten Anlaßtemperatur wurde verringert.

## Patentansprüche

1. Scheibenwischer, insbesondere Flachbalken-Scheibenwischer für Fahrzeuge, mit einem Federbandrücken (10), der einen über die Rückenlänge (1) variable Banddicke (d) aufweist, mit einer mittig am Federbandrücken (10) angeordneten Anschlußvorrichtung (11) für einen Wischerarm (12) und mit einer am Federbandrücken (10) befestigten, gummielastischen Wischleiste (13), **dadurch gekennzeichnet, daß** der Federbandrücken (10) so vergütet ist, daß er einen über die Rückenlänge (1) quasi konstanten Festigkeits- oder Härteverlauf aufweist.

2. Scheibenwischer nach Anspruch 1, **dadurch gekennzeichnet, daß** der Federbandrücken (10) im Durchlaufverfahren auf eine Härtetemperatur erwärmt, anschließend abgeschreckt und zum Anlassen auf Anlaßtemperatur so erwärmt wird, daß er die Anlaßtemperatur erst unmittelbar vor Verlassen der Anlaßzone erreicht.

3. Scheibenwischer nach Anspruch 2, **dadurch gekennzeichnet, daß** die Anlaßzone in mehreren Temperaturzonen unterteilt ist und daß der Federbandrücken (10) so durch die Temperaturzone hindurchgeführt wird, daß er die die Anlaßtemperatur herbeiführende Temperaturzone zuletzt durchläuft.

4. Scheibenwischer nach Anspruch 3, **dadurch gekennzeichnet, daß** die in Durchlaufrichtung des Federbandrückens (10) letzte Temperaturzone in ihrer Länge so auf die Durchlaufgeschwindigkeit des Federbandrückens (10) abgestimmt ist, daß das Federbandmaterial die Anlaßtemperatur so spät wie möglich erreicht.

5. Scheibenwischer nach einem der Ansprüche 2 - 4, **dadurch gekennzeichnet, daß** der Federbandrücken durch Wärmestrahlung erwärmt wird.

6. Scheibenwischer nach einem der Ansprüche 3 - 5, **dadurch gekennzeichnet, daß** die in Durchlaufrichtung des Federbandrückens (10) letzte Temperaturzone gegenüber der vorhergehenden Temperaturzonen thermisch gut abgeschottet ist.

## Claims

1. Wiper, especially flat bar wiper for vehicles, having a spring-band spine (10) which has a band thickness (d) which is variable over the spine length (1), having a connecting device (11), which is arranged centrally on the spring-band spine (10), for a wiper arm (12) and having a rubber-elastic wiper strip (13) fastened to the spring-band spine (10), **characterized in that** the spring-band spine (10) is hardened and tempered in such a manner that it has a virtually constant strength or hardness profile over the spine length (1).

2. wiper according to Claim 1, **characterized in that**, in a continuous operation, the spring-band spine (10) is heated to a hardening temperature, is subsequently quenched and, to temper it, is heated to the tempering temperature in such a manner that it reaches the tempering temperature only immediately before it leaves the tempering zone.

3. Wiper according to Claim 2, **characterized in that** the tempering zone is divided into a plurality of temperature zones, and **in that** the spring-band spine (10) is guided through the temperature zone in such a manner that it passes last through the temperature zone bringing about the tempering temperature.

4. Wiper according to Claim 3, **characterized in that** the last temperature zone in the pass-through direction of the spring-band spine (10) is matched in its length to the pass-through speed of the spring-band spine (10) in such a manner that the spring-band material reaches the tempering temperature as late as possible.

5. Wiper according to one of Claims 2-4, **characterized in that** the spring-band spine is heated by heat radiation.

6. Wiper according to one of Claims 3-5, **characterized in that** the last temperature zone in the pass-through direction of the spring-band spine (10) is well partitioned off thermally with respect to the preceding temperature zones.

## Revendications

1. Essuie-glace, en particulier raclette d'essuie-glace à poutre plate pour véhicule, comprenant une bande de dos élastique (10) qui présente sur sa longueur (1) une épaisseur de bande (d) variable avec au milieu de cette bande élastique (10) un dispositif de raccordement (11) pour un bras d'essuie-glace (12), et une lame d'essuyage (13) élastique comme du caoutchouc et fixée à la bande élastique (10),
**caractérisé en ce que**
la bande de dos élastique (10) est traitée de manière qu'elle présente sur sa longueur (1) une résistance ou une dureté quasi constante.

2. Essuie-glace selon la revendication 1,
**caractérisé en ce que**
la bande de dos élastique (10) est amenée en continu à une température de trempe, elle est ensuite refroidie brusquement puis échauffée jusqu'à une température de revenu, de manière qu'elle atteigne cette température juste avant de quitter la zone de revenu.

3. Essuie-glace selon la revendication 2,
**caractérisé en ce que**
la zone de revenu est divisée en plusieurs zones de température et la bande de dos élastique (10) est passée à travers ces zones, de manière à traverser en dernier la zone de température créant la température de revenu.

4. Essuie-glace selon la revendication 3,
**caractérisé en ce que**
la dernière zone de température, par rapport au sens de passage de la bande de dos élastique (10), a sa longueur accordée à la vitesse de passage de cette bande élastique (10), de manière que le matériau qui constitue la bande de dos élastique atteigne la température de revenu aussi tard que possible.

5. Essuie-glace selon une des revendications 2 à 4,
**caractérisé en ce que**
la bande de dos élastique est chauffée par rayonnement thermique.

6. Essuie-glace selon une des revendications 3 à 5,
**caractérisé en ce que**
la dernière zone de température dans le sens de passage de la bande de dos élastique (10) est bien isolée thermiquement des zones de température qui la précèdent.
